Europäisches Patentamt

**European Patent Office**

Office européen des brevets

(19)

(11) Veröffentlichungsnummer: **0 024 720**
**B1**

(12) **EUROPÄISCHE PATENTSCHRIFT**

(45) Veröffentlichungstag der Patentschrift:
08.05.85

(21) Anmeldenummer: 80105064.2

(22) Anmeldetag: 26.08.80

(51) Int. Cl.⁴: **G 06 F 13/00**

(54) Schaltungsanordnung zum Verarbeiten von Daten in einer aus Zentralprozessor, Arbeitsspeicher und dazwischen angeordnetem Pufferspeicher bestehenden Datenverarbeitungsanlage.

(30) Priorität: 30.08.79 DE 2935135

(43) Veröffentlichungstag der Anmeldung:
11.03.81 Patentblatt 81/10

(45) Bekanntmachung des Hinweises auf die Patenterteilung:
08.05.85 Patentblatt 85/19

(84) Benannte Vertragsstaaten:
AT BE CH FR GB IT LI LU NL SE

(56) Entgegenhaltungen:
DE - A - 2 605 617
DE - A - 2 854 782
US - A - 4 056 844
US - A - 4 070 706

IBM TECHNICAL DISCLOSURE BULLETIN, Band 13, Nr. 2, Juli 1970, Seiten 400-402, New York, USA M.W. BEE et al.: "Removal of failing buffer sections in a buffer-backing store"
IBM TECHNICAL DISCLOSURE BULLETIN, Band 13, Nr. 9, Februar 1971, Seiten 2777-2778, New York, USA P.A. SMITH: "Variable architecture computer"

(73) Patentinhaber: Siemens Aktiengesellschaft, Berlin und München Wittelsbacherplatz 2, D-8000 München 2 (DE)

(72) Erfinder: Kähler, Jürgen. Dipl.-Ing-, Lampertstrasse 6, D-8031 Puchheim (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Schaltungsanordnung zum Verarbeiten von Daten in einer aus Zentralprozessor, Arbeitsspeicher und dazwischen angeordnetem Pufferspeicher bestehenden Datenverarbeitungsanlage gemäß dem Oberbegriff des Patentanspruchs 1.

Es ist bekannt, in einer Datenverarbeitungsanlage ab einer bestimmten Leistungsklasse zwischen Zentralprozessor und Arbeitsspeicher einen Pufferspeicher, ein sogenanntes Cache, vorzusehen, in welchem ein Teil des im Arbeitsspeicher enthaltenen Gesamtdatenbestandes zum Zwecke eines schnelleren Zugriffs zwischengespeichert werden kann. Dem Konzept des Cache-Speichers liegt die Erfahrung zugrunde, daß Lese- oder Schreibzugriffe im Arbeitsspeicher häufig konsekutive Adressen betreffen. Greift man also einen, meist aber mehrere Speicherbereiche heraus und überträgt sie in das Cache, so hat dies eine spürbare Verkürzung der Zugriffszeit gegenüber einer herkömmlichen Abwicklung mit dem in Bezug auf die Zugriffszeit wesentlich langsameren Arbeitsspeicher zur Folge. Ist nun eine Adresse anzusprechen, die sich nicht im Cache-Speicher befindet, so wird ein entsprechender Abschnitt des Cache-Speichers mit dem Arbeitsspeicherabschnitt gefüllt und der Eintrag entsprechend registriert, weil zu erwarten ist, daß während des gerade ablaufenden Programms mit großer Wahrscheinlichkeit erneut auf diesen Abschnitt zugegriffen wird. Die Schwierigkeiten in Bezug auf eine Verkürzung der Zugriffszeit bestehen vor allen Dingen dann, wenn, wie in größeren Datenverarbeitungsanlagen üblich, die Daten virtuell adressiert werden. Dies hat nämlich zur Folge, daß die Adresse vor jedem Zugriff zum Cache bzw. zum Arbeitsspeicher zunächst in eine physikalische Adresse übersetzt werden muß. Diese Übersetzung erfolgt, um den Aufwand auch hier möglichst gering zu halten, in bekannter Weise dadurch, daß man den virtuellen und den physikalischen Speicher in Seiten von z. B. 2k Byte Größe unterteilt und über Übersetzungstafeln, die beispielsweise im Arbeitsspeicher stehen können, jeder physikalischen Seitenadresse eine virtuelle Seitenadresse zuordnet. Um nun die Zahl der Lesezugriffe zu den Adreßübersetzungstafeln möglichst gering zu halten, wird gemäß einem bekannten Vorschlag (DE-OS 2 605 617) in der Zentraleinheit ein schneller teilassoziativer Adreßübersetzungsspeicher vorgesehen, indem ein Teil der Übersetzungstafeln vorübergehend dupliziert wird. Aus Kostengründen kann auch dieser Speicher nicht so groß gemacht werden, daß sich eine genügend hohe Trefferrate einstellt. Es wird daher auch aus diesem Grund vorkommen, daß unmittelbare Zugriffe zum Arbeitsspeicher notwendig werden.

Aus den genannten Gründen ist es deshalb vorteilhaft, bestimmte Einträge beispielsweise mit Hilfe eines eigens dafür vorgesehenen Überwachungsbits (Schutzbit) vor einem etwaigen Löschen oder Überschreiben zu schützen, weil dadurch eine hohe Cache-Trefferrate, insbesondere bei Lesezugriffen im Zusammenhang mit einer Adreßübersetzung erzielt wird.

Aus IBM Technical Disclosure Bulletin Band 13; Nr. 2, Juli 1970, Seiten 400—402 ist eine Pufferspeicheranordnung bekannt, bei der der Datenpuffer in zwei gleichgroße Bereiche mit jeweils mehreren Seiten aufgeteilt ist und jedem Bereich des Datenpuffers je eine Hälfte eines ebenfalls in zwei gleichgroße Bereiche unterteilten Adressenspeichers zugeordnet ist. Am Ausgang der beiden Adressenspeicher ist je eine Vergleichsschaltung vorgesehen, in der ein Adressenvergleich zwischen der unmittelbar vom Adressenregister des Zentralprozessors stammenden Seitenadresse und der im Adressenspeicher gegebenenfalls gespeicherten Seitenadresse erfolgt. Außerdem enthält jeder Adressenspeicher der Adreßinformation ein sogenanntes Gültigkeitsbit, das angibt, ob die Adreßinformation aktuell gültig ist, d. h., ob der entsprechende Datenblock im Datenpuffer verfügbar ist.

Der begrenzte Speichervorrat im Cache hat nun zur Folge, daß bei einem in der Verarbeitungseinheit stattfindenden Aufgaben- bzw. Programmwechsel andere Speicherbereiche aktuell werden. Die ungeschützten Teile des Cacheinhalts werden dabei automatisch durch das neue Programm mit einer Information überschrieben, wobei anfangs die Trefferrate sehr gering sein wird. Bei geschützten Informationen dauert deshalb das Überschreiben durch neu zu schützende Einträge meist zu lange, so daß das Cache durch diese wertlosen Einträge nicht wieder seine volle Trefferrate erreicht. Es ist daher sinnvoll, beim Programmwechsel den Schutzzustand aufzuheben und die entsprechenden Schutzbits zu löschen. Dieser Löschvorgang, bei dem alle Einträge des Cache sequentiell adressiert werden müssen, verursacht andererseits aber wieder einen erheblichen Zeitaufwand, so daß der weitere Betriebsablauf empfindlich gestört wird. Aus der DE-A-2 854 782 ist bereits ein Datenverarbeitungssystem mit einem Pufferspeicher bekannt, bei dem zur Markierung der im Pufferspeicher gespeicherten Informationen zwei sogenannte Verwendungsregister vorgesehen sind, die abwechselnd aktiviert werden, wobei in jedem Verwendungsregister maximal die Hälfte der Speicherplätze belegt werden kann. Die Belegung eines bisher freien Registerplatzes im gerade aktivierten Verwendungsregister setzt dabei voraus, daß der parallele Registerplatz im jeweils anderen Verwendungsregister ebenfalls frei ist. Sobald nun im gerade aktivierten Register durch laufende Neubelegung die Hälfte der Registerplätze besetzt ist, erfolgt eine Umschaltung auf das andere Register, wobei die dort belegten Registerplätze zunächst gelöscht werden müssen, bevor dieses Register neu aktiviert werden kann. Gerade dieser Löschvorgang ist es aber, der wegen des damit verbundenen Zeitaufwandes den weiteren Betriebsablauf empfindlich stören kann.

Der vorliegenden Erfindung liegt nun die Aufgabe zugrunde, einen Weg aufzuzeigen, wie das Rücksetzen bzw. Löschen von durch Überwachungsbits geschützten Einträgen im Cache möglichst ohne Behinderung des laufenden Programms und möglichst ohne zusätzlichen Zeitbedarf durchgeführt werden kann.

Ausgehend von einer Schaltungsanordnung der eingangs genannten Art wird diese Aufgabe erfindungsgemäße durch die im kennzeichnenden Teil des Patentanspruchs 1 oder 2 genannten Merkmale gelöst.

Eine vorteilhafte Weiterbildung der Erfindung ist im Anspruch 3 angegeben. Durch das Vorhandensein zweier Schutzsignalspeicher für die Speicherung der Schutzbits steht bei jedem Programmwechsel immer der vorher gerade nicht benutzte Speicher für den Ablauf des neuen Programms unmittelbar und sofort zur Verfügung, während der jeweils andere, bisher benutzte Speicher gleichzeitig gelöscht werden kann.

Im folgenden werden zwei Ausführungsbeispiele von erfindungsgemäß aufgebauten Schaltungsanordnungen anhand der Zeichnung näher erläutert. Es zeigt

Fig. 1 einen Ausschnitt aus dem Adreßteil eines Pufferspeichers mit zwei Schutzsignalspeichern zur Speicherung von Schutzbits sowie eine Schaltungsanordnung zum Löschen von jeweils in einem der Schutzsignalspeicher vorhandenen Schutzbits,

Fig. 2 eine vereinfachte Ausführungsform einer Schaltungsanordnung gemäß Fig. 1.

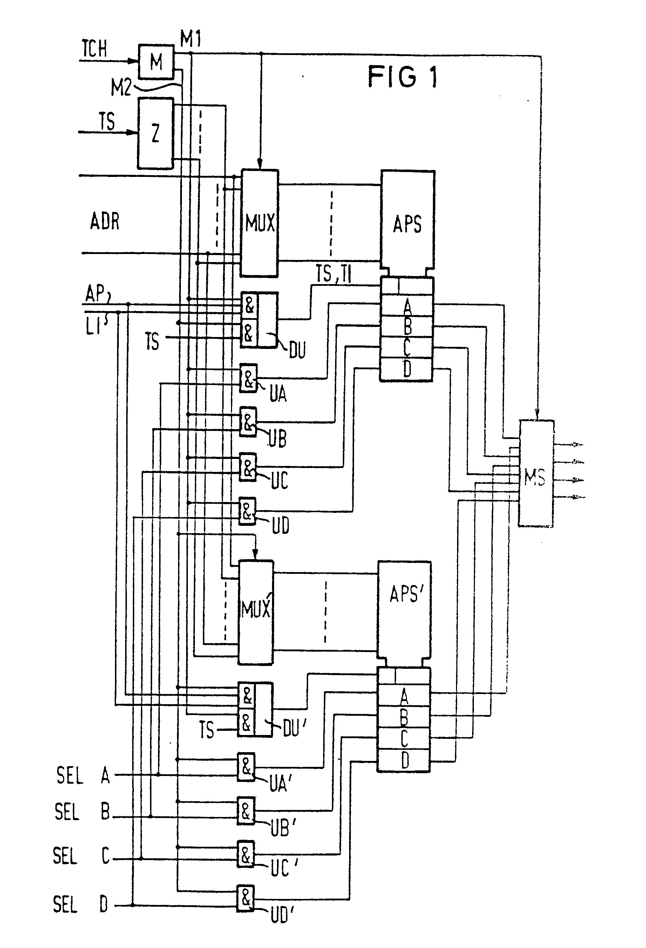

Die in Fig. 1 dargestellte Schaltungsanordnung geht von einer Datenverarbeitungsanlage aus, bei der die im Arbeitsspeicher und im Pufferspeicher gespeicherten Daten durch Seiten- und Klassenadressen adressiert werden. Der Pufferspeicher besteht aus einem mehrere gleichgroße Bänke mit jeweils mehreren Seiten unterteilten Datenpuffer und mehreren, jeweils einer der Bänke zugeordneten, der Speicherung der Seitenadressen dienenden Adressenspeichern, wobei der Inhalt von Datenpuffer und zugehörigem Adressen-Speicher mit der Klassenadresse ausgewählt wird und am Ausgang eines jeden Adressenspeichers mit Hilfe je einer Vergleichsschaltung ein Adressenvergleich zwischen der unmittelbar vom Adressenregister des Zentralprozessors stammenden Seitenadresse und der im Adressenspeicher gegebenenfalls gespeicherten Seitenadresse erfolgt. Der Pufferspeicher enthält ferner zwei Schutzsignalspeicher APS und APS', in denen die zur Markierung und Überwachung einzelner Cache-Einträge dienenden Schutzbits AP eingespeichert sind. Diese Schutzbits AP greifen dabei derart in den Ersetzungsalgorithmus ein, daß Einträge mit gesetztem AP-Bit bevorzugt behandelt und solange vor dem Überschreiben geschützt werden, wie noch freie Speicherplätze mit nicht gesetzten AP-Bit vorhanden sind. Dadurch wird bei Lesezugriffen zu geschützten Informationen eine hohe Trefferrate erreicht. Eine sinnvolle Anwendung dieser Schutzbits ergibt sich beispielsweise durch eine bevorzugte Behandlung derjenigen Speicherzugriffe, die im Zusammenhang mit der Adreßübersetzung bei virtueller Adressen erfolgt. Sie ist umso wirkungsvoller, je geringer die Trefferrate des Adreßübersetzungsspeichers selbst ist. Der Ersetzungsalgorithmus kann auch so gesteuert werden, daß pro Zeile in jeweils nur einer Bank ein AP-Bit gesetzt und damit jeweils nur ein Eintrag geschützt werden, um die Trefferrate für normale Zugriffe nicht zu sehr zu verringern.

Erfolgt in der Verarbeitungseinheit ein Aufgabenwechsel, so werden im Cache andere Einträge aktuell. Jeder Aufgabenwechsel wird im Cache durch ein entsprechendes Signal TCH angezeigt. Dieses Signal TCH invertiert dann jedesmal einen z. B. als Schaltflipflop ausgebildeten Merker M, wobei in Abhängigkeit vom Zustand der beiden Ausgänge M1, M2 des Merkers abwechselnd der eine oder der andere Schutzsignalspeicher APS, APS' aktiviert wird.

Es sei nun angenommen, daß der Merker M so angesteuert ist, daß die Adresse ADR eines neuen Speichereintrages, d. h. dessen Seitenklassenadresse über den Multiplexer MUX an den Schutzsignalspeicher APS gelangt. Da das Cache beispielsweise aus vier Bänken A, B, C, D besteht, sind entsprechend vier UND-Glieder UA, UB, UC, UD vorgesehen, die einerseits durch das erste Ausgangssignal M1 des Merkers M und andererseits durch das jeweilige Bankauswahlsignal SEL A, SEL B, SEL C und SEL D angesteuert werden. Aufgrund des gewählten Ersetzungsalgorithmus, wonach z. B. pro Zeile nur jeweils in einer Bank ein AP-Bit gesetzt werden soll, wird beispielsweise nur das UND-Glied UA durchgeschaltet, während die übrigen UND-Glieder gesperrt werden. Das Setzen des jeweiligen AP-Bits im Schutzsignalspeicher APS setzt einen Taktimpuls TI voraus, der am Ausgang eines UND-ODER-Gliedes DU auftritt. Dieses Taktsignal TI entsteht durch logische Verknüpfung im oberen Teil-UND-Glied des UND-ODER-Gliedes und zwar durch Verknüpfung des auf einen ersten Zustand zeigenden Ausgangssignals M1 des Merkers M mit dem von der Verarbeitungseinheit ausgesandten AP-Signal und einem Lesefehlzugriff-Ladeimpuls LI. Das untere Teil-UND-Glied des UND-ODER-Gliedes DU wird durch ein Taktsignal TS, und durch den zweiten Zustand des Merkers M über dessen Ausgangssignal M2 angesteuert und damit zunächst gesperrt. Die vier Ausgangssignale des Schutzsignalspeichers APS gelangen schließlich über einen ebenfalls vom Merker M gesteuerten Mehrfachschalter MS an die Ersetzungslogik, die aufgrund des neuen Eintrags den Ersetzungsalgorithmus neu festlegt.

Im Falle eines Aufgabenwechsels wird der Merker M, wie bereits erwähnt, aufgrund des von der Verarbeitungseinheit ausgesandten Signals TCH invertiert, was zur Folge hat, daß nunmehr über die Multiplexer MUX, MUX' und den Mehrfachschalter MS der zweite Schutzsignalspeicher APS' aktiviert und der erste Schutzsignalspeicher APS gesperrt wird. Beide Schutzsignalspeicher APS und APS' einschließlich der ihnen zugeordneten Schaltungen stimmen in Aufbau und Funktion völlig überein, weshalb für die zweite Schaltungshälfte die gleichen Bezugzeichen, jedoch mit zusätzlichem Apostroph, verwendet wurden.

Mit der Aktivierung des zweiten Schutzsignalspeichers APS' wird gleichzeitig ein Löschvorgang für den ersten Schutzsignalspeicher APS eingeleitet. Dies geschieht dadurch, daß das Cache über einen Zähler Z Zeile für Zeile mit dem Taktsignal TS adressiert wird. Dasselbe Taktsignal TS geht über das untere, inzwischen vom Merker M freigegebene Teil-UND-Glied des UND-ODER-Gliedes DU an den Takteingang des Schutzsignalspeichers APS. Schließlich werden noch alle UND-Glieder UA ... UD gesperrt, so daß an den Dateneingängen der Bänke, A, B, C, D jeweils Nullen auftreten. Durch das sequentielle Adressieren der Einträge mit Hilfe des vom Taktsignal TS gesteuerten Zählers Z wird somit in vorteilhafter Weise ein schnellstmögliches systematisches Rücksetzen des Schutzsignalspeichers erreicht. Das Taktsignal TS kann beispielsweise vom Maschinentakt abgeleitet werden.

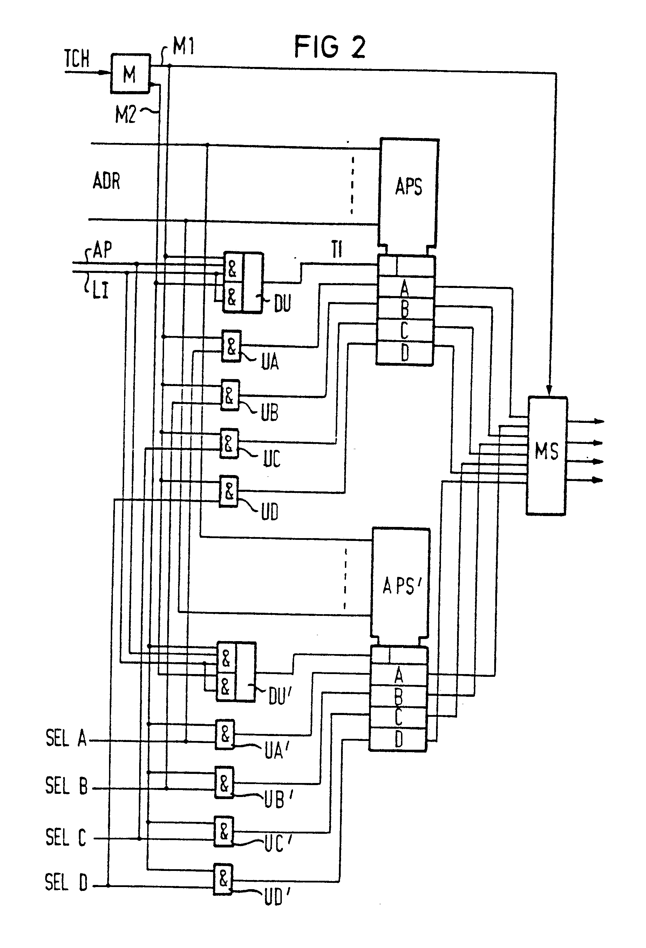

Die Fig. 2 zeigt ein gegenüber Fig. 1 etwas vereinfachtes Schaltbild, wobei sich der Unterschied durch das Fehlen des Zählers Z und der beiden Multiplexer MUX, MUX' ergibt. Außerdem wird das untere Teil-UND-Glied des UND-ODER-Gliedes nicht mit dem Taktsignal TS sondern mit dem Lesefehlzugriff-Ladeimpuls LI angesteuert. In allen übrigen Schaltungsteilen besteht völlige Übereinstimmung, weshalb zweckmäßigerweise auch die gleichen Bezugzeichen übernommen worden sind. Bei dieser zweiten Schaltungsanordnung erfolgt der Löschvorgang dadurch, daß die Adressen ADR jedes Lesezugriffs, der nicht zu einem Treffer im Cache führt, gleichzeitig zum Löschen der nicht mehr aktuellen AP-Bits im Schutzsignalspeicher APS' verwendet werden. Das bedeutet, daß bei einem in einer bestimmten Zeile vorgesehenen Lesezugriff gleichzeitig im Schutzsignalspeicher APS' und zwar in der gleichen Zeile ein Rücksetzimpuls erzeugt und das dort gegebenenfalls vorhandene AP-Bit gelöscht wird. Das Rücksetzen geschieht hier also nicht mehr systematisch Zeile für Zeile, sondern in Abhängigkeit von den Zufälligkeiten der Lesezugriffe des neuen Programms entsprechend sprunghaft und unsystematisch.

Schließlich sei noch erwähnt, daß beim Einschalten der Anlage selbstverständlich beide Schutzsignalspeicher gelöscht sein müssen. Dies geschieht zweckmäßigerweise durch Parallelschalten beider Schutzsignalspeicher und gleichzeitiges Löschen mit Hilfe eines Taktsignals, wobei alle Einträge durch einen im Cache vorhandenen Zähler sequentiell adressiert werden.

## Patentansprüche

1. Schaltungsanordnung zum Verarbeiten von Daten in einer Datenverarbeitungsanlage, bei der zwischen einem Zentralprozessor und einem Arbeitsspeicher ein Pufferspeicher angeordnet ist und die Daten durch Seiten- und Klassenadressen adressiert werden, bei der der Pufferspeicher aus einem in mehrere gleichgroße Bänke mit jeweils mehreren Seiten unterteilten Datenpuffer und mehreren, jeweils einer der Bänke zugeordneten, der Speicherung der Seitenadressen dienenden Adressenspeichern besteht, wobei der Inhalt von Datenpuffer und zugehörigem Adressenspeicher mit der Klassenadresse ausgewählt wird und am Ausgang eines jeden Adressenspeichers mit Hilfe je einer Vergleichsschaltung ein Adressenvergleich zwischen der unmittelbar vom Adressenregister des Zentralprozessors stammenden Seitenadresse und der im Adressenspeicher gespeicherten Seitenadresse erfolgt und bei der einzelne Speichereinträge im Pufferspeicher durch Schutzsignale markierbar sind, die in zwei gleichgroßen, den Adressenspeichern zugeordneten Schutzsignalspeichern einspeicherbar sind, von denen durch eine gesteuerte Umschaltung jeweils einer aktiviert und der jeweils andere gesperrt ist, dadurch gekennzeichnet, daß zum Löschen der Schutzsignalspeicher der Takteingang jedes Schutzsignalspeichers (APS, APS') mit dem Ausgang je eines UND-ODER-Gliedes (DU, DU') verbunden ist, über dessen erstes Teil-UND-Glied ein vom Zentralprozessor ausgesandtes Schutzsignal (AP) mit einem Lesefehlzugriff-Ladeimpuls (LI) und mit einem ersten bzw. zweiten Ausgangsignal (M1 bzw. M2) eines durch ein Programmaufgabenwechsel-Signal (TCH) gesteuerten und die Umschaltung von einem zum anderen Schutzsignalspeicher (APS, APS') bewirkenden Schalt-Flip-Flops (M) verknüpft ist, während über das zweite Teil-UND-Glied ein Taktsignal (TS) mit dem zweiten bzw. ersten Ausgangssignal (M2 bzw. M1) des Schalt-Flip-Flops (M) verknüpft sind und daß die Adreßeingänge der beiden Schutzsignalspeicher (APS, APS') über je einen durch das Schalt-Flip-Flop gesteuerten Muliplexer (MUX, MUX') wahlweise mit dem Adressenregister des Zentralprozessors oder den Ausgängen eines fortlaufende Adressen für den Löschvorgang erzeugenden Zählers (Z) verbindbar sind.

2. Schaltungsanordnung zum Verarbeiten von Daten in einer Datenverarbeitungsanlage, bei der zwischen einem Zentralprozessor und einem Arbeitsspeicher ein Pufferspeicher angeordnet ist, und die Daten durch Seiten- und Klassenadressen adressiert werden, bei der der Pufferspeicher aus einem in mehrere gleichgroße Bänke mit jeweils mehreren Seiten unterteilten Datenpuffer und mehreren, jeweils einer der Bänke zugeordneten, der Speicherung der Seitenadressen dienenden Adressenspeichern besteht, wobei der Inhalt von Datenpuffer und zugehörigem Adressenspeicher mit der Klassenadresse ausgewählt wird und am Ausgang eines jeden Adressenspeichers mit Hilfe je einer Vergleichsschaltung ein Adressenvergleich zwischen der unmittelbar vom Adressenregister des Zentralprozessors stammenden Seitenadresse und der im Adressenspeicher gespeicherten Seitenadresse erfolgt und bei der einzelne Speichereinträge im Pufferspeicher durch Schutzsignale markierbar sind, die in zwei gleichgroßen, den Adressenspeichern zugeordneten Schutzsignalspeichern einspeicherbar sind, von denen durch eine gesteuerte Umschaltung jeweils einer aktiviert und der jeweils andere gesperrt ist, dadurch gekennzeichnet, daß zum Löschen der Schutzsignalspeicher der Takteingang jedes Schutzsignalspeichers (APS, APS') mit dem Ausgang je eines UND-ODER-Gliedes (DU, DU') verbunden ist, über dessen erstes Teil-UND-Glied ein vom Zentralprozessor ausgesandtes Schutzsignal (AP) mit einem Lesefehlzugriff-Ladeimpuls (LI) und mit einem ersten bzw. zweiten Ausgangssignal (M1 bzw. M2) eines durch ein Programmaufgabenwechsel-Signal (TCH) gesteuerten und die Umschaltung von einem zum anderen Schutzsignalspeicher (APS, APS') bewirkenden Schalt-Flip-Flops (M) verknüpft ist, während über das zweite Teil-UND-Glied der Lesefehlzugriff-Ladeimpuls (LI) mit dem zweiten bzw. ersten Ausgangssignal (M2 bzw. M1) des Schalt-Flipflops (M) verknüpft sind, und daß die Adreßeingänge der beiden Schutzsignalspeicher (APS, APS') unmittelbar mit dem Adressenregister des Zentralprozessors verbunden sind.

3. Schaltungsanordnung nach Anspruch 1 oder 2, dadurch gekennzeichnet, daß jedem der beiden Schutzsignalspeicher (APS, APS') mehrere, der Auswahl der Pufferspeicherbänke entsprechende UND-Glieder (UA, UB, UC, UD) zugeordnet sind, in denen je ein jeweils einer Bank (A, B, C, D) zugeordnetes Bankauswahlsignal (SEL A, SEL B, SEL C, SEL D] mit dem ersten bzw. zweiten Ausgangssignal (M1, M2) des die Umschaltung von einem Schutzsignalspeicher zum anderen Schutzsignalspeicher bewirkenden Schalt-Flip-Flops (M) verknüpft wird und daß die Ausgangssignale der beiden Schutzsignalspeicher mittels eines vom Schalt-Flip-Flop (M) steuerbaren Mehrfachschalters (MS) alternierend ausgewählt werden.

**Claims**

1. A circuit arrangement for processing data in a data processing system, wherein a buffer store is arranged between a central processor and a working store, and the items of data are addressed by means of page- and class-addresses, wherein the buffer store comprises a data buffer, which is sub-divided into a plurality of equal-sized banks each comprising a plurality of pages, and of a plurality of address stores which are each assigned to one of the banks and which serve to store the page-addresses, wherein the content of data buffer and associated address store is selected by means of class-address, and at the output of each address store, in each case with the assistance of a comparison circuit, an address comparison takes place between the page-address, which emanates directly from the address register of the central processor, and the page-address stored in the address store, and wherein individual store entries in the buffer store can be marked by means of protection signals which can be input into two equal-sized protection signal stores which are assigned to the address stores, and of which one is activated and the other is blocked by means of a controlled switch-over, characterised in that, for the erasure of the protection signal stores, the clock pulse input of each protection signal store (APS, APS') is connected to the output of an AND-OR-gate (DU, DU'), via the first subsidiary-AND-gate of which a protection signal (AP), transmitted from the central processor, is logic-linked to a failed-read-access-load pulse (LI) and to a first or second output signal (M1 or M2) of a switching-flip-flop (M) which is controlled by means of a programme-function-change signal (TCH) and which effects the switch-over from the one to the other protection signal store (APS, APS'), whereas via the second subsidiary-AND-gate a clock pulse signal (TS) is logic-linked to the second or first output signal (M2 or M1) of the switching flip-flop (M), and that the address inputs of the two protection signal stores (APS, APS') can each be connected via a multiplexer (MUX, MUX'), controlled by means of the switching-flip-flop, selectively to the address register of the central processor or to the outputs of a counter (Z) which produces continuous addresses for the erasure process (Z).

2. A circuit arrangement for processing data in a date processing system, wherein a buffer store is arranged between a central processor and a working store, and the items of data are addressed by means of page- and class-addresses, wherein the buffer store comprises a data buffer which is sub-divided into a plurality of equal-sized banks each comprising a plurality of pages, and of a plurality of address stores which are each assigned to one of the banks and which serve to address the page-addresses, wherein the content of data buffer and associated address store is selected by means of the class-address, and at the output of each address store, in each case with the assistance of a comparison circuit, an address comparison is carried out between the page-address, which directly emanates from the address register of the central processor, and the page-address stored in the address store, and wherein individual stores entries in the buffer store can be marked by means of protection signals which can be input into two equal-sized protection signal stores which are assigned to the address stores and of which one is activated and the other is blocked by means of a controlled switch-over, characterised in that for the erasure of the protection signal stores, the clock pulse input of each protection signal store (APS, APS') is connected to the output of an AND-OR-gate (Du, DU'), via whose first subsidiary-AND-gate a protection signal (AP), transmitted from the central processor, is logic-linked to a failed-read-access-load pulse (LI) and to a first or second output signal (M1 or M2) of a switching-flip-flop (M) which is controlled by means of a programme-function-change signal (TCH) and which effects the switch-over from one to the other protection signal store (APS, APS'), whereas, via the second subsidiary-AND-gate, the failed-read-access-load pulse (LI) is logic-linked to the second or first output signal (M2 or M1) of the switching-flip-flop (M), and that the address inputs of the two protection signal stores (APS, APS') are directly connected to the address register of the central processor.

3. A circuit arrangement as claimed in claim 1 or 2, characterised in that each of the two protection signal stores (APS, APS') are assigned a plurality of AND-gates (UA, UB, UC, UD) which correspond to the selection of the buffer storage banks, and in each of which a bank-selection signal (SEL A, SEL B, SEL C, SEL D), in each case assigned to a bank (A, B, C, D), is logic-linked to the first of second output signal (M1, M2) of the switching-flip-flop (M) which effects the switch-over from one protection signal store to the other, and that the output signals of the two protection signal stores are alternately selected by means of a multiple switch (MS) which can be controlled by means of the switching-flip-flop (M).

## Revendications

1. Montage pour le traitement de données dans une installation de traitement de données dans lequel une mémoire tampon est disposée entre un processeur central et une mémoire de travail et les données sont adressées par des adresses de page et de classe, dans lequel la mémoire tampon est constituée d'un tampon de données divisé en plusieurs bancs d'égale grandeur de plusieurs pages chacun et de plusieurs mémoires d'adresses conjuguées à l'un des bancs et servant à la mémorisation des adresses de page, le contenu du tampon de données et la mémoire d'adresses correspondante état sélectionnés par l'adresse de classe et à la sortie de chaque mémoire d'adresses s'effectuant, à l'aide de chaque fois un montage de comparaison, une comparaison entre l'adresse de page provenant directement du registre d'adresses du processeur central et l'adresse de page mémorisée dans la mémoire d'adresses, et dans lequel les différentes inscriptions dans la mémoire tampon peuvent être marquées par des signaux de protection susceptibles d'être mémorisés dans deux mémoires de signaux de protection d'égale grandeur et conjuguées aux mémoires d'adresses, dont l'une est activée chaque fois par une commutation commandée et l'autre est bloquée, caractérisé en ce que, pour l'effacement du contenu des mémoires de signaux de protection, l'entrée d'horloge de chaque mémoire de signal de protection (APS, APS') est reliée à la sortie de chaque fois un élément ET—OU (DU, DU'), à travers le premier élément ET partiel duquel un signal de protection (AP) émis par le processeur central est combiné avec une impulsion de chargement d'accès de lecture manqué (L1) et avec un premier respectivement un second signal de sortie (M1 respectivement M2) d'une bascule de commutation (M) commandée par un signal (TCH) de changement de programme ou de tâche et produisant la commutation de l'une à l'autre mémoire de signaux de protection (APS, APS'), tandis qu'un signal d'horloge (TS) est combiné à travers le second élément ET partiel avec le second respectivement le premier signal de sortie (M2 respectivement M1) de la bascule de commutation (M) et que les entrées d'adresse des deux mémoires de signal de protection (APS, APS') peuvent être reliées sélectivement, chaque fois à travers un multiplexeur (MUX, MUX') commandé par la bascule de commutation, au registre d'adresses du processeur central ou aux sorties d'un compteur (Z) produisant des adresses continues pour le processus d'effacement.

2. Montage pour le traitement de données dans une installation de traitement de données où une mémoire tampon est disposée entre un processeur central et une mémoire de travail et les données sont adressées par des adresses de page et de classe, dans lequel la mémoire tampon est constituée d'un tampon de données divisé en plusieurs bancs d'égale grandeur de plusieurs page chacun et de plusieurs mémoires d'adresses conjuguées à l'un des bancs et servant à la mémorisation des adresses de page, le contenu du tampon de données et la mémoire d'adresses correspondante étant sélectionnés par l'adresse de classe et à la sortie de chaque mémoire d'adresse s'effectuant, à l'aide de chaque fois un montage de comparaison, une comparaison entre l'adresse de page provenant directement du registre d'adresses du processeur central et l'adresse de page mémorisée dans la mémoire d'adresses, dans lequel les différentes inscriptions dans la mémoire tampon peuvent être marquées par des signaux de protection susceptibles d'être mémorisés dans deux mémoires de signaux de protection d'égale grandeur et conjuguées aux mémoires d'adresses, dont l'une est activée chaque fois par une commutation commandée et l'autre est bloquée, caractérisé en ce que, pour l'effacement du contenu des mémoires de signal de protection, l'entrée d'horloge de chaque mémoire de signaux de protection (APS, APS') est reliée à la sortie de chaque fois un élément ET-OU (DU, DU'), à travers le premier élément ET partiel duquel un signal de protection (AP) émis par le processeur central est combiné avec une impulsion de chargement d'accès de lecture manqué (L1) et avec un premier respectivement un second signal de sortie (M1 respectivement M2) d'une bascule de commutation (M) commandée par un signal (TCH) de changement de programme ou de tâche et produisant la commutation de l'une à l'autre mémoire de signaux de protection (APS, APS'), tandis que l'impulsion de chargement d'accès de lecture manqué (L1) est combiné à travers le second élément ET partiel, avec le second respectivement le premier signal de sortie (M2 respectivement M1) de la bascule de commutation (M) et que les entrées d'adresse des deux mémoires de signaux de protection (APS, APS') sont reliées directement au registre d'adresses du processeur central.

3. Montage selon la revendication 1 ou 2, caractérisé en ce que plusieurs éléments ET (UA, UB, UC, UD), correspondant à la sélection des bancs de la mémoire tampon, sont conjugués à chacune des deux mémoires de signaux de protection (APS, APS'), éléments ET dans chacun desquels un signal de sélection de banc (SEL A, SEL B, SEL C, SEL D), associé chaque fois à un banc (A, B, C, D), est combiné avec le premier respectivement le deuxième signal de sortie (M1, M2) de la bascule de commutation (M) produisant la commutation d'une mémoire de signaux de protection à l'autre mémoire de signaux de protection et que les signaux de sortie des deux mémoires de signaux de protection sont sélectionnés alternativement au moyen d'un commtateur multiple (MS) commandé par la bascule de commutation (M).

FIG 1

FIG 2